# EUROPEAN PATENT SPECIFICATION

(11) **EP 3 183 288 B1**
(45) Date of publication and mention of the grant of the patent: **06.01.2021**
(21) Application number: 15754178.0
(22) Date of filing: 20.08.2015
(51) Int. Cl.: C08J 5/04, C08K 7/02, C08L 67/04

(54) **POLYLACTIC ACID COMPOSITES WITH NATURAL FIBERS**
POLYMILCHSÄUREVERBUNDSTOFFE MIT NATURFASERN
COMPOSITES D'ACIDE POLYLACTIQUE AVEC DES FIBRES NATURELLES

(30) Priority: 21.08.2014 EP 14181778
(43) Date of publication of application: 28.06.2017
(73) Proprietor: INEOS Styrolution Group GmbH, 60325 Frankfurt (DE)
(72) Inventor: GUALDONI, Roberto, 67157 Wachenheim (DE); NIESSNER, Norbert, 67159 Friedelsheim (DE); AHN, SangJun, Seoul 138-740 (KR)
(74) Representative: Jacobi, Markus Alexander
(86) International application number: PCT/EP2015/069118
(87) International publication number: WO 2016/026920

(56) References cited:
- EP-A1- 1 589 076
- EP-A1- 1 652 874
- EP-A1- 1 795 561
- EP-A1- 1 939 253
- EP-A1- 2 186 846
- WO-A1-2007/047999
- WO-A1-2009/139508
- WO-A1-2014/063664
- CN-A- 103 059 527
- CN-A- 103 509 317
- FR-A1- 2 987 301
- JP-A- 2001 335 710
- JP-A- 2002 069 303
- JP-B1- 5 527 489
- KR-A- 20090 058 374
- KR-A- 20130 110 425
- KR-A- 20130 110 843
- US-A1- 2011 109 013

## Description

The present invention relates to thermoplastic molding compositions obtainable from a polylactic acid component and at least one fiber component by an improved process of preparation, which comprises the steps of mixing the components without using a solvent and of treating the composition with a temperature of 180° to 220°C for a period of time of 5 minutes.

From KR-A 2014-0063316 (Hyundai) a method for manufacturing of natural fiber/ polylactic acid (PLA) composite materials is known. The method is tin catalyzed and may, e.g. for health reasons, not be appropriate for several applications of the material.

KR-A 2010-0093707 (HAN IL E HWA) describes an interior panel of an automobile, with reduced manufacturing cost while simplifying the process by manufacturing a foam layer through only pressing without an additional process. The automobile interior material includes a poly-lactic acid foam layer containing thermal expansion micro compounds and also includes a reinforcement layer containing natural fibers and synthetic fibers. The polylactic acid foam layer has a specific foaming rate and a dual structure.

From KR-B 100921114 (Hyundai) a preparation method for PLA/natural fiber composites is known. The molding process requires no water and the injection molding product is available in chip form. A method for manufacturing of PLA/natural fiber composite materials is described, however the production steps all include a prior washing step with water.

US-A 2007-203287 (Sony) describes a resin composition comprising lactic acid (A), metal hydroxide (B) and fibers (C), wherein the fibers (C) are natural fibers and/or fibers derived from natural material. Moldings thereof are flame retardant. The polylactic acid used has a high degree of either L - or D-stereoisomer.

From US 5,434,004 (Mitsui Toatsu) a laminate comprising a thermoplastic polymer, having degradability in natural environment, and a regenerated cellulose film (cellophane), paper, leather, cloth or fiber is known. The document describes the laminated composition comprising a polymer essentially consisting of polylactic acid or a lactic acid-hydroxycarboxylic acid copolymer and cellophane, paper, leather, cloth or fiber. The laminated composition can be used as moisture-proof packaging papers, decorative papers and containers for milk.

JP-A 2002-069303 (IBB KK) teaches a molding of a vegetable fiber resin which is obtained by mixing a vegetable fiber such as straw, polylactic acid and calcium bicarbonate and subjecting the mixture to injection molding. JP-A 2001-335710 (Chiba Institute of Technology) refers to a biodegradable fiber-reinforced composite material and a method for producing the same, wherein the fiber-reinforced composite material comprises a biodegradable thermoplastic resin and cellulosic vegetable fiber. Also JP-B 5,527,489 refers to a thermoplastic resin composition comprising polylactic resin and cellulose fibers EP-A 2186846 (Cheil) refers to a natural fiber-reinforced polylactic acid resin composition that includes a first polylactic acid resin; and a natural fiber surface-treated with a second polylactic acid resin.

EP-A 1589076 (NEC) teaches a kanaf-fiber-reinforced resin composition. FR-A 2987301 (D&D Intelligence) refers to a process that involves preparing a mixture of polylactic acid with fibers by means of a double screw mixer. WO 2007/047999 (Clemson University) teaches polymeric composites that may include a lactide-based polymeric matrix reinforced with fibers derived from renewable resources. EP-A 1652874 (Mitsubishi Plastics) refers to injection molded articles that are formed from plant-derived materials as main components and bear heat resistance and high crystallization rates, wherein the resin composition contains lignin. US-A 2011/109013 (Toyota) refers to a method for producing a thermoplastic resin composition that contains a vegetable material in a large amount of 50% or more by weight and is capable of being pelletized so as to exhibit high fluidity.

WO 2009/139508 Indonesian Institute of Sciences; Toyota) teaches a composite material which comprises admixture of kenaf bast micro fibers and a polymer of polypropylene and/or polylactic acid, wherein the micro fibers are contained. CN-A 103509317 (Shanghai Genius Adv. Mat.) relates to a natural fiber/polylactic acid composite material and a preparation method thereof, wherein a coupling agent and of nucleating agent are used. CN-A 103059527 (Ji Yongming et al.) teaches a polylactic acid-plant fiber composite degradable material which is mainly prepared by a process including grinding agricultural waste or residual waste after agricultural processing at high speed by utilizing the physical principle of cooling to obtain powder with required particle size, sterilizing at high temperature, and carrying out emulsification polymerization with starch to obtain a plant fiber filler.

WO 2014/063664 refers to a composite material containing polypropylene natural fibers of cellulose, silicon-based additive, and an additive based on dialkyl peroxides, which acts as a chemical catalyst. EP-A 1939253 (Cheil) teaches a polylactic acid-based resin composition comprising natural fibers and a coupling agent. KR-A 2009-0058374 (Hyundai) refers to a method of producing a polylactic acid/natural fiber composite with reduced generation of bad smell. EP-A 1795561 (Mitsubishi Plastics) teaches a material comprising lactic acid, a metal hydroxide and a fiber. KR-A 2013-0110843 (LG Hausys) and KR-A 2013-0110425 (LG Hausys) refer to boards using polylactic acid, wood fiber and a method for producing such.

These materials can be readily degraded after use in the natural environment. The lamination is realized in solution. The material to be laminated is first treated with the lamination material and then dried, which leads to longer preparation procedures.

CN-A 2006-137894 (Dongli Fiber) discloses a PLA/natural fiber composite, which is composed of polylactic acid resin and natural fibers. The production comprises performing surface treatment on natural fibers with coupling agent, mixing with polylactic acid, antioxidant, nucleating agent and lubricant, melt-extruding, and granulating to obtain the product. The PLA/natural fiber composite is described as having a high modulus, heat resistance, processability, and biodegradability. It can be used in automobile industry. The method however requires soaking of the coupling agent and the fiber for a period of 0.5 to 6 hours.

EP-A 1939253 (Cheil) describes a polylactic acid (PLA) based resin composition containing natural fibers and coupling agents. According to the examples, an amount of 40 parts by weight of natural fiber leads to insufficient mixing properties in the extruder.

Therefore, some composite materials with polylactic acid (PLA) as continuous phase and natural fibers as dispersed phase are known in the art. However, no teaching is provided about improved processing conditions in order to prepare, in a simplified process (and in a larger production scale), a composite material with a very low thermal degradation.

Ecological sustainability becomes increasingly important and it is particularly intended by the present invention to reduce the amount of waste by using high amounts of biodegradable thermoplastics. It is an object of the present invention to provide an improved process for the preparation of thermoplastic molding compositions, obtainable (or obtained) from polylactic acid and fibers.

A preferred composite can be obtained by blending lactic acid polymer, natural fiber and optionally additives using a temperature ramp up of > 200 °C/min; a melt temperature of max. 250 °C, preferred max. 230, especially max. 220 °C, often 180-220 °C and a residence time (for heat treatment) of less than 10 minutes, in accordance to the invention is of less than 5 minutes, preferred less than 3 minutes and especially preferred less than 2 minutes.

The present invention relates to thermoplastic molding compositions obtainable (or obtained) from polylactic acid and fibers.

The invention in particular relates to thermoplastic molding compositions obtained (prepared) from a polylactic acid component and at least one fiber component by an improved process of preparation. This process comprises the steps of mixing the components without using a solvent and of treating the composition with a temperature of 180° to 220°C for a period of time of 1 to 10 minutes.

The invention is defined by the claims.

The invention also relates to a thermoplastic molding composition, obtainable or obtained by using the following components:
A) PLA, with an L-lactic acid/D-lactic acid ratio from 0:100 to 6:94,
B) natural fibers, in particular fibers derived from natural cotton.

The invention also relates to a thermoplastic molding composition, obtained by using a PLA component A, with an L-lactic acid/D-latic acid ratio from 0.5:99.5 to 6:94, in particular from 2:98 to 4:96.

The invention also relates to a thermoplastic molding composition, obtained by using as component B natural fibers, selected from the group of kenaf fibers, jute fibers, flax fibers, hemp fibers, cellulosic fibers, cotton fibers, sisal fibers, chitin fibers, keratin fibers and coir fibers.

The invention also relates to a thermoplastic molding composition, obtained by using as component B fibers derived from natural products, selected from the group of pre-treated fibers: kenaf fibers, jute fibers, flax fibers, hemp fibers, cellulosic fibers, cotton fibers, sisal fibers, chitin fibers, keratin fibers and coir fibers.

The invention also relates to a thermoplastic molding composition, obtained by using at least one further polymer component (C) in an amount of 1-20 %, selected from the group of polystyrene, styrene-acrylonitrile copolymers, polycarbonates, polyesters and polyamides.

The invention also relates to a thermoplastic molding composition, obtained by using at least one additive component (D) selected from the group of coupling agents (DC), lubricants, waxes, talcum, light stabilizers, heat stabilizers, process stabilizers, antioxidants, pigments, catalysts, particulate filling agents.

The invention also relates to a thermoplastic molding composition, obtained by using as component A a PLA which has a melt flow index (determined at a temperature of 210°C and at a load of 2,16 kg according to ASTM procedure D1238) of between 3 and 10 g/10 min, and by using as component B cotton fibers with a fiber length of 0.5 to 2 mm and a fiber diameter of 2 to 20 micrometer, in particular of 2.5 to 10 micrometer.

A further aspect relates to a process for the preparation of a thermoplastic molding composition, which comprises the following steps:
step (i) of mixing the components A and B, and optionally C and D, as described above, without using a solvent, and
step (ii) of heat treatment with a temperature of 180° to 220°C without using a solvent for a period of less than 5 minutes, and
step (iii) of cooling of the molding composition below the glass transition temperature (Tg) of the composition leading to solidification of the molding composition.

The invention also relates to a process for the preparation of a thermoplastic molding composition, which comprises the step of a heat treatment (ii) with a temperature of 180° to 210°C in a press for a period of less than 5 minutes.

The invention also relates to a process for the preparation of a thermoplastic molding composition, which comprises the step of heat treatment (ii) with a temperature of 180° to 200°C for a period of 5 minutes or less, in particular less than 3 minutes.

A further aspect relates to the use of a thermoplastic molding composition as described above or obtainable / obtained by a process as described above for producing a composite product selected from:
(i) film material,
(ii) packing material,
(iii) plastics molding,
(iv) fiber or yarn,
(v) fabric or tissue, and
(vi) micro- or nanobeads.

The invention also relates to the use of a thermoplastic molding composition for producing a composite product selected from:
(i) film material, (ii) packing material, (iii) plastics molding,
(iv) fiber or yarn, (v) fabric or tissue,
wherein said thermoplastic molding composition constitutes for more than 60 %, in particular more than 80 % (w/w), often more than 95 % (w/w) of said composite product.

In the following, the various types of components to be used in the process of preparation of the thermoplastic molding compositions are described in more detail.

### Component A

Component (A) according to the present invention is at least one thermoplastic polylactic acid (PLA), which may be any thermoplastic PLA known in the art.

It is generally taught that component A may be present in the molding compositions in a proportion of from 20 to 80% by weight, preferably from 30 to 70% by weight and particularly from 45 to 55% by weight, based on the total of components A and B, C, and D. According to the invention component A is resent in the molding compositions in a proportion of from 20 to 55% by weight, based on the total of components A and B, C, and D.

The PLA may be a homopolymer (i.e., a polymer comprising essentially a single type of monomer moieties) or a copolymer (i.e., a polymer comprising two or more types of monomer moieties). Preferably, the PLA according to the present invention is a homopolymer, essentially consisting of PLA monomer moieties. A polymer according to the present invention (homopolymer or copolymer) may bear a linear or branched structure. Preferably, a homopolymer is used that has a linear polymer strand with essentially no or only few cross-linkages.

The range of the weight-average molecular weight (Mw) of the polymer component A is favorably in the range from 50,000 to 400,000 (g/mol), more favorably in the range from 100,000 to 300,000, more favorably in the range from 100,000 to 250,000, as measured by standard methods. The melt flow (MFI) often is in the range of 5-7 g/10 min (210 °C, 2.16 kg).

The polymerization process to obtain the PLA may be performed by any known methods, for example by condensation polymerization or ring opening polymerization. The condensation polymerization may be performed in solution, in the melt, or as a suspension. Under vacuum or by azeotropic distillation, the resulting water may be removed. The condensation polymerization enables a method towards a PLA having an arbitrary composition by direct dehydration condensation polymerization of the L-lactic acid, the D-lactic acid or a mixture thereof.

The ring opening polymerization may be performed metal catalyzed in solution, in the melt, or as a suspension. Exemplarily, polymerization catalysts and co-catalysts, such as transition metal organometallic components are used. As lactides, L-lactides which are the dimers of the L-lactic acid, D-lactides which are the dimers of the D-lactic acid, and DL-lactides (meso-lactides) consisting of the L-lactic acid and the D-lactic acid can be used.

The PLA may be essentially pure PLA, comprising only lactic acid monomers. The PLA may also comprise up to 8% (w/w), preferably not more than 5% (w/w), even more preferably not more than 2% (w/w) of other monomer moieties included in the polymer. PLA according to the invention, which are essentially pure, do contain less than 1% (w/w), preferably not more than 0.5% (w/w), in particular not more than 0.1% (w/w) of other monomer moieties included in the polymer.

The polylactic acid (PLA) which can be used in the present invention includes L-polylactic acid having L-lactic acid as its structure unit, D-polylactic acid having D-lactic acid as its structure unit, DL-polylactic acid having the L-lactic acid and the D-lactic acid as its structure unit, and mixtures thereof.

The thermoplastic polylactic acid component A of the present invention may also include a copolymer of PLA with diol/dicarboxylic acids or with hydroxy-carboxylic acids. Copolymerization component may be selected from non-aliphatic diol such as an adduct of ethylene oxide with bisphenol A and non-aliphatic dicarboxylic acid such as terephthalic acid. Diol/dicarboxylic acids are preferably aliphatic diol, and aliphatic dicarboxylic acid. Hydroxy-carboxylic acids are preferably alpha-hydroxy-carboxylic acid other than the lactic acid. These copolymerization components may be used singly or in combination thereof.

As the aliphatic diol which can be used as the copolymerization component of the PLA, ethylene glycol, 1,4-butanediol, and 1,4-cyclohexanedimethanol are listed. As aliphatic dicarboxylic acid which can be used as the copolymerization component of the lactic acid resin, succinic acid can be named. As other hydroxy-carboxylic acids which can be used as the copolymerization component of the PLA, bifunctional aliphatic hydroxy-carboxylic acids such as glycolic acid, 3-hydroxybutyric acid, 4-hydroxybutyric acid, 2-hydroxy-n-butyric acid, 2-hydroxy-3,3-dimethylbutyric acid, 2-hydroxy-3-methylbutyric acid, 2-methyllactic acid, and 2-hydrocycaproic acid; and lactones such as caprolactone, butyrolactone, and valerolactone are listed.

The DL structure (mol ratio between the structure of the D-lactic acid and the structure of the L-lactic acid) is described by the ratio of the L-lactic acid : the D-lactic acid. This ration can e.g. be 100:0 to 60:40. It also can be 0:100 to 40:60. In a preferred embodiment, the ratio of DL-lactic acid is L-lactic acid : D-lactic acid = 99.5:0.5 to 90:10 or L-lactic acid : D-lactic acid = 0.5:99.5 to 10:90, in particular L-lactic acid : D-lactic acid = 99.5:0.5 to 94:6 or L-lactic acid : D-lactic acid = 0.5:99.5 to 6:94.

Thermoplastic PLA resins having different DL structures can be obtained by mixing different components with each other. In that case, it is preferable that the ratio of the DL structure is within the above-described range or that an average of the mixture of the lactic acid resins has the DL structure in the above-described range.
Mixing a homopolymer of the L-lactic acid or that of the D-lactic acid with a copolymer of the L-lactic acid and the D-lactic acid, may prevent a resulting resin composition from bleeding and control the balance in the heat resistance thereof.

As used herein, the term "at least one polylactic acid (PLA)" indicates that there may optionally be only one type or different types of PLA polymers in the composition of the present invention. Such different types of PLA polymers may, exemplarily, have different molecular weights, different melt flow indices (MFIs) and/or different co-monomer or additive compositions.

A single type of PLA may be PLA bearing a molecular weight (Mw) range of 50,000 to 400,000 (g/mol) +/-10%, a melt flow index (MFI) determined at a temperature of 210°C and at a load of 2.16 kg according to ASTM procedure D1238 of 3 to 50 +/-1 g/10 min and an essentially comparable monomer moiety composition and distribution over the polymer strand. Different types of PLA may vary in at least one of the aforementioned characteristics.

Preferably, the thermoplastic PLA used according to the invention has a melt flow index (MFI) (determined at a temperature of 210°C and at a load of 2,16 kg according to ASTM procedure D1238) of less than 50 g/10 min, more preferably of less than 30 g/10 min, even more preferably of less than 20 g/10 min, in particular of less than 10 g/10 min, often from 5 to 7 g/10 min. Preferably, the PLA has a melt flow index (MFI) (determined at a temperature of 210°C and at a load of 2,16 kg according to ASTM procedure D1238) of at least 1 g/10 min, more preferably of at least 2 g/10 min, even more preferably of at least 3 g/10 min.

The PLA has a melt flow index (MFI) (determined at a temperature of 210°C and at a load of 2,16 kg according to ASTM procedure D1238) of between 1 and 50 g/10 min, more preferably of between 2 and 30 g/10 min, even more preferably of between 2 and 20 g/10 min, even more preferably of between 2 and 15 g/10 min, even more preferably of between 2 and 10 g/10 min, even more preferably of between 3 and 10 g/10 min, even more preferably of between 4 and 9 g/10 min, in particular of between 5 and 7 g/10 min.

Component A may further be prepared by using a small amount (less than 1% by weight) of a chain-extending agent to increase the molecular weight.

As the chain-extending agent, it is possible to use isocyanates, acid chlorides, anhydrides, epoxides, thiirane, and oxazoline. Preferably a diisocyanate compound, an epoxy compound or an acid anhydride is used.

In a preferred embodiment, high melting and highly crystalline composites can be formed by mixing poly lactic acid D-isomers and poly lactic acid L-isomers. Those stereo-complex crystals are subsequently added to PLA, and holding the mixture at temperatures below 220 °C.

As a commercially available representative of the thermoplastic polylactic acid which can be used in the present invention, LACEA® series, produced by Mitsui Chemical Inc., and Nature Works LLC (commercial name) series, produced by Cargill Dow LLC, are named. Also PLA-products sold under INGEO 2002 D of Nature Works LLC are of interest.

### Component B

The fiber component (B) which can be used in the present invention includes at least a natural fiber and/or a fiber derived from a natural material. It is generally taught that component B is present in the molding compositions in a proportion of from 20 to 80% by weight, preferably from 30 to 70% by weight and particularly preferably from 45 to 55% by weight, based on the total of components A and B, C, and D. According to the invention component B is resent in the molding compositions in a proportion of from 45 to 80% by weight, based on the total of components A and B, C, and D.

Fibers are materials that will continuously discrete elongated pieces, similar to pieces of thread. They can be used as an important component of the composite materials. They can in principle also be matted into sheets to make products such as paper or felt. The natural fibers can be from different sources, e.g. from the group comprising:
kenaf fibers, jute fibers, flax fibers, hemp fibers, cellulosic fibers, cotton fibers, sisal fibers, chitin fibers, keratin fibers and coir fibers.

Preferably, the thermoplastic molding composition comprises as component B cotton fibers.

The two main categories of fiber-reinforced composite materials are continuous fiber-reinforced materials and the short fiber-reinforced materials. The continuous fiber-reinforced materials often possess a layered or laminated structure. The woven and continuous fiber styles are typically available in a variety of forms, being pre-impregnated with the given matrix (resin), dry, unidirectional tapes of various widths, plain weave, harness satins, braided, and stitched. The short fiber-reinforced materials have the advantage of providing stiffness levels achievable with continuous fibers while at the same time being moldable into complex shapes.

According to the present invention, the fiber length is from 0.1 to 100 mm, preferably from 0.1 to 80 mm, more preferably from 0.1 to 65 mm, even more preferably from 0.2 to 40 mm, even more preferably from 0.3 to 20 mm.

In a preferred embodiment the fiber diameter is from 0.1 to 70 µm, preferably from 0.1 to 40 µm, more preferably from 0.5 to 30 µm, even more preferably from 1 to 20 µm, even more preferably from 2 to 15 µm. In particular, the fiber diameter is from 2.5 to 10 µm.

The fiber component B may e.g. comprise cellulose from 20-100%, often from 23-96% by weight. It can also comprise pectin/pectinate from 10-15% by weight, pentosan from 5-10% by weight, lignin from 22-26% by weight, wax from 0,4-7% by weight, ash from 0,7-14% by weight, protein from 1-12% by weight, calcium from 0,1-4% by weight, and manganese from 0,07-0.7% by weight.

### Component C

Component C may be a further polymer component, which is different to component A (and B). Component C is present in the molding compositions in a proportion of from 0 to 60% by weight, preferably from 0 to 50% by weight and particularly preferably from 0 to 30% by weight, often from 1 to 20% by weight, based on the total of components A and B, C, and D.

Examples of such additional polymer are the following:
a) Polymers of monoolefins and diolefins, for example polypropylene, polyisobutylene, polybut-1-ene, poly-4-methylpent-1-ene, polyvinylcyclohexane, polyisoprene or polybutadiene.
b) Mixtures of the polymers mentioned under a), for example mixtures of polypropylene with polyisobutylene, polypropylene with polyethylene and mixtures of different types of polyethylene.
c) Hydrocarbon resins (for example C5-C9) including hydrogenated modifications thereof (e.g. tackifiers) and mixtures of polyalkylenes and starch.
d) Polystyrene, poly(p-methylstyrene), poly(a-methylstyrene).
e) Aromatic homopolymers and copolymers derived from vinyl aromatic monomers including styrene, α-methylstyrene, all isomers of vinyl toluene, especially p-vinyltoluene, all isomers of ethyl styrene, propyl styrene, vinyl biphenyl, vinyl naphthalene, and vinyl anthracene, and mixtures thereof.
f) Graft copolymers of vinyl aromatic monomers such as styrene or α-methylstyrene, for example styrene on polybutadiene, styrene on polybutadiene-styrene or polybutadiene-acrylonitrile copolymers; styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or methacrylates on polybutadiene; styrene and acrylonitrile on ethylene/propylene/diene terpolymers; styrene and acrylonitrile on polyalkyl acrylates or polyalkyl methacrylates, styrene and acrylonitrile on acrylate/butadiene copolymers, as well as mixtures thereof with the copolymers listed under 5), for example the copolymer mixtures known as ABS, MBS, ASA or AES polymers.
g) Halogen-containing polymers.
h) Polymers derived from α,β-unsaturated acids and derivatives thereof, for example, polyacrylates and polymethacrylates; polymethyl methacrylates, polyacrylamides and polyacrylonitriles, impact-modified with butyl acrylate.
i) Copolymers of the monomers mentioned under h) with each other or with other unsaturated monomers, for example acrylonitrile/butadiene copolymers, acrylonitrile/alkyl acrylate copolymers, acrylonitrile/alkoxyalkyl acrylate or acrylonitrile/vinyl halide copolymers or acrylonitrile/alkyl methacrylate/butadiene terpolymers.
j) Polymers derived from unsaturated alcohols and amines or the acyl derivatives or acetals thereof.
k) Homopolymers and copolymers of cyclic ethers.
l) Polyacetals, for example polyoxymethylene; polyphenylene oxides and sulfides, and mixtures of polyphenylene oxides with styrene polymers or polyamides.
m) Polyurethanes derived from hydroxyl-terminated polyethers, polyesters or polybutadienes on the one hand and aliphatic or aromatic polyisocyanates on the other, as well as precursors thereof.
n) Polyamides and copolyamides derived from diamines and dicarboxylic acids and/or from aminocarboxylic acids or the corresponding lactams, for example polyamide 4, polyamide 6, polyamide 6/6, 6/10, 6/9, 6/12, 4/6, 12/12, polyamide 11, polyamide 12, aromatic polyamides starting from m-xylene diamine and adipic acid; and also block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol; as well as polyamides or copolyamides modified with EPDM or ABS; and polyamides condensed during processing (RIM polyamide systems).
o) Polyureas, polyimides, polyamide-imides, polyetherimids, polyesterimids, polyhydantoins and polybenzimidazoles.
p) Polyesters derived from dicarboxylic acids and diols and/or from hydroxycarboxylic acids or the corresponding lactones, and also polyesters modified with polycarbonates or MBS.
q) Polycarbonates and polyester carbonates.
r) Polyketones.
s) Polysulfones, polyether sulfones and polyether ketones.
t) Crosslinked polymers derived from aldehydes on the one hand and phenols, ureas and melamines on the other hand, such as phenovformaldehyde resins, urea/formaldehyde resins and melamine/formaldehyde resins.
u) Unsaturated polyester resins derived from copolyesters of saturated and unsaturated dicarboxylic acids with polyhydric alcohols and vinyl compounds as crosslinking agents, and also halogen-containing modifications thereof of low flammability.
v) Crosslinkable acrylic resins derived from substituted acrylates, for example epoxy acrylates, urethane acrylates or polyester acrylates.
w) Alkyd resins, polyester resins and acrylate resins crosslinked with melamine resins, urea resins, isocyanates, isocyanurates, polyisocyanates or epoxy resins.
x) Natural polymers (which are not fibers), such as rubber, gelatin and chemically modified homologous derivatives thereof.
y) Blends of the aforementioned polymers (polyblends), for example PP/EPDM, Polyamide/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPO/HIPS, and copolymers, PA/HDPE, PA/PP, PA/PPO, PBT/PC/ABS or PBT/PET/PC.
z) Naturally occurring and synthetic organic materials (but not fibers) which are pure monomeric compounds or mixtures of such compounds, for example, mineral oils, animal and vegetable fats, oil and waxes, or oils, fats and waxes based on synthetic esters (e.g. phthalates, adipates, phosphates or trimellitates) and also mixtures of synthetic esters with mineral oils in any weight ratios, typically those used as spinning compositions, as well as aqueous emulsions of such materials.

In principle, also aqueous emulsions of natural or synthetic rubbers, e.g. natural latex or latices of carboxylated styrene/butadiene copolymers, can also be used. Of particular interest as component C are styrene(co)polymers.

### Component D

Component D is one or several additives which are present in the thermoplastic molding compositions in a proportion of from 0 to 50% by weight, preferably from 0 to 40% by weight, often from 0.2 to 20%, in some cases from 0.01 to 5 % by weight, based on the total of components A and B, C, and D.

Further, the thermoplastic composition may comprise additives in a range in which the properties of the composition of the present invention are not affected. Component D are often one or several additives, selected from the group comprising lubricants, pigments, mold-release agents, waxes, dyes, flame retardants, antioxidants, stabilizers to counter the action of light, thermal and UV-stabilizers, powder fillers, reinforcing agents, antistatics, coupling agent (wetting agents), or mixtures of these. In particular, coupling agents are used in an amount of 0.1 to 3 % by weight based on the total of components A to D.

Examples of suitable lubricants, mold-release agents, and waxes are stearic acids, stearyl alcohol, esters or amides of stearic acid, silicone oils, montan waxes, soap, and polyethylene- and polypropylene-based lubricants.

Pigments are composed of solid particles less than 100 µm, preferably less than 50µm, more preferably less than 1 µm in diameter. Examples of pigments are titanium dioxide, zinc chromate, phthalocyanines, lithopone, ultramarine blue, iron oxides and carbon black, and the entire class of organic pigments.

Dyes are all dyes which can be used for the transparent, semitransparent or non-transparent coloration of polymers, in particular those which are suitable for coloration of PLA polymers. Dyes of this type are known to the person skilled in the art.

Examples of flame retardants are the halogen- or phosphorus-containing compounds known to the person skilled in the art, magnesium hydroxide and other customary compounds or mixtures of these. Red phosphorus is also suitable.

Suitable antioxidants are sterically hindered mono- or polynuclear phenolic antioxidants, which may be substituted in various ways and also bridged via substituents. These include not only monomeric but also oligomeric compounds, which may be built up from more than one fundamental phenol unit. Hydroquinones and substituted compounds which are hydroquinone analogs are also suitable, as are antioxidants based on tocopherols and their derivatives. Mixtures of different antioxidants may also be used. In principle, it is possible to use any compound which is commercially available or suitable for styrene copolymers, such as Topanol® (of ICI) or Irganox® (of BASF). Alongside the phenolic antioxidants mentioned as examples above, it is possible to use costabilizers, in particular phosphorus- or sulfur-containing costabilizers. Such phosphorus- or sulfur-containing costablizers are known to the person skilled in the art and are commercially available.

Examples of suitable stabilizers to counter the action of light are various substituted resorcinols, salicylates, benzotriazoles, benzophenones and HALS (hindered amine light stabilizers), commercially available, for example, as Tinuvin® (of BASF, Germany).

Suitable particulate fillers are carbon black, amorphous silicic acid, magnesium carbonate (chalk), powdered quartz, mica, mica, bentonites, talc, feldspar or in particular calcium silicates, such as wollastonite, and kaolin.

Examples of suitable antistats are amine derivatives, such as N,N-bis(hydroxyalkyl)-alkylamines or -alkyleneamines, polyethylene glycol esters, copolymers of ethylene glycol and propylene glycol, and glycerol mono- and distearates, and mixtures of these.

Furthermore, the thermoplastic compositions according to the invention may often, as component D, comprise at least one coupling agent (DC) to improve the adhesion between PLA (component A) and natural fiber (component B). Such coupling agents (DC) may be silanes.

This coupling component DC is present in the molding compositions in a proportion of from 0 to 5% by weight, preferably from 0.01 to 5% by weight and particularly preferably from 0.1 to 3 % by weight, based on the total of components A and B, C, and D.

Generally, a silane coupling agent forms an oxane bond (M-O-Si, wherein, M=Si, Ti, Al, Fe, etc.) on a surface of a mineral.

The silane coupling agent can be added and mixed with the PLA resin (A) along with the natural fibers (B), to improve the compatibility between the PLA resin and the natural fibers, and thereby also improve the mechanical strength of the composition. In contrast, poor mechanical strength is a common defect for conventional PLA based resins.

In an exemplary embodiment, the silane coupling agent may be represented by the following formula (DC-I) or formula (DC-II):

(RO-)ₙM-(-O X R'Y)₄-n (DC-I)

(RO-)₃Si-(-R'Y) (DC-II)

wherein:
R and R' are an aliphatic or aromatic thermoplastic functional group, M is a catalytic functional group such as tetravalent titanium or zirconium, X is a binder functional group such as a phosphato-, pyrophosphato-, sulfonyl-, carboxyl group, Y is a thermosetting functional group, and n is in the range of about 1 to 3. In exemplary embodiments of the invention, Y can be a thermosetting functional group, in particular an epoxy group, acryl group, methacryl group, mercapto group, amino group, NCO group, capable of reacting with various curatives to increase the cross-link network density or provide a UV/EB function; (RO)n can be a coupling functional group such as a hydrolyzable group or a substrate reactive group with surface hydroxyl groups or protons;
R' can be a thermoplastic functional group such as aliphatic and non-polar isopropyl, butyl, octyl, isostearoyl groups; naphthenic and mildly polar dodecylbenzyl groups; or aromatic benzyl, cumyl phenyl groups which can optimize bonding as determined by polarity of the polymer or substrate; and (-R'Y) can be a hybrid functional group and can include for example mono, di or tri-organofunctional hybrid titanates, such as a titanate containing 1-mole of an aliphatic isostearoyl ligand (which can function as a thermoplastic functional group) and 2-moles of acryl ligands (which can function as a thermosetting functional group).

In some exemplary embodiments of the invention, a silane coupling agent having a terminal epoxy group may be used. Examples of the silane coupling agent include: 3-glycidoxypropyl trimethoxy silane, 3-glycidoxy propylmethyl dimethoxysilane, 2-(3,4-epoxycyclohexyl)ethyltrimethoxysilane, 3-methacryloxy propyl trimethoxy silane. The coupling agent may be used alone or in combination of two or more.

The coupling agent (DC) often is used in an amount of about 0.01 to about 5 % by weight, for example about 0.1 to about 3 % by weight. If the amount is less than about 0.01 % by weight, it is difficult to improve mechanical strength. When the amount exceeds about 5 %by weight, the viscosity in the melt extruder significantly rises, which can negatively affect molding performance.

Also other coupling agents can be used. Those agents shall bear functional groups which are able to react fast under moderate temperature conditions (preferred 200-220 °C). Maleic anhydride bearing molecules, organic acids or bases are amongst them.

### Process of preparation

Composite fabrication usually involves wetting, mixing or saturating the reinforcement material with the polymer matrix, and then causing the matrix to bind together (with heat or a chemical reaction) into a rigid structure. The operation is usually done in an open or closed forming mold, but the order and ways of introducing the ingredients varies considerably.

Within a mold, the reinforcing and matrix materials are combined, compacted, and cured (processed) to undergo a melding event. After the melding event, the part shape is essentially set, although it can deform under certain process conditions. For a thermoplastic polymeric matrix material, the melding event is a solidification from the molten state, e.g. by cooling. For many molding methods, it is convenient to refer to one mold piece as a "lower" mold and another mold piece as an "upper" mold. Lower and upper refer to the different faces of the molded panel, not the mold's configuration in space. In this convention, there is always a lower mold, and sometimes an upper mold. Part construction begins by applying materials to the lower mold. Lower mold and upper mold are more generalized descriptors than more common and specific terms such as male side, female side, a-side, b-side, tool side, bowl, hat, mandrel, etc. Continuous manufacturing uses a different nomenclature.

The molded product is often referred to as a panel. For certain geometries and material combinations, it can be referred to as a casting. For certain continuous processes, it can be referred to as a profile.

In one preferred embodiment, the components according to the invention are molded by vacuum bag moulding, wherein a flexible film to enclose the part and seal it from outside air is used. A vacuum is then drawn on the vacuum bag and atmospheric pressure compresses the part during the cure. Vacuum bag material is available in a tube shape or a sheet of material. When a tube shaped bag is used, the entire part can be enclosed within the bag. When using sheet bagging materials, the edges of the vacuum bag are sealed against the edges of the mold surface to enclose the part against an air-tight mold. When bagged in this way, the lower mold is a rigid structure and the upper surface of the part is formed by the flexible membrane vacuum bag. The flexible membrane can be a reusable silicone material or an extruded polymer film. After sealing the part inside the vacuum bag, a vacuum is drawn on the part (and held) during cure. This process can be performed at either ambient or more preferred at elevated temperature with ambient atmospheric pressure acting upon the vacuum bag. A vacuum pump is typically used to draw a vacuum. An economical method of drawing a vacuum is with a venturi vacuum and air compressor.

A vacuum bag is a bag made of strong rubber-coated fabric or a polymer film used to compress the part during cure or hardening. In some applications the bag encloses the entire material, or in other applications a mold is used to form one face of the laminate with the bag being a single layer to seal to the outer edge of the mold face. When using a tube shaped bag, the ends of the bag are sealed and the air is drawn out of the bag through a nipple using a vacuum pump. As a result, uniform pressure approaching one atmosphere is applied to the surfaces of the object inside the bag, holding parts together while the adhesive cures. The entire bag may be placed in a temperature-controlled oven, oil bath or water bath and gently heated to accelerate curing.

In another preferred embodiment, the components according to the invention are molded by pressure bag molding, which is related to vacuum bag molding. A solid female mold is used along with a flexible male mold. The reinforcement is placed inside the female mold with just enough resin to allow the fabric to stick in place (wet lay up). A measured amount of resin is then liberally brushed indiscriminately into the mold and the mold is then clamped to a machine that contains the male flexible mold. The flexible male membrane is then inflated with heated compressed air or possibly steam. The female mold can also be heated. Excess resin is forced out along with trapped air.

### Autoclave molding

A process using a two-sided mold set that forms both surfaces of the panel. On the lower side is a rigid mold and on the upper side is a flexible membrane made from silicone, metal or a heat resistant extruded polymer film.

Reinforcement materials can be placed manually or robotically. They include continuous fiber forms fashioned into textile constructions. They can be pre-impregnated with the resin in the form of prepreg fabrics or unidirectional tapes. In some instances, a resin film is placed upon the lower mold and dry reinforcement is placed above. The upper mold is installed and vacuum is applied to the mold cavity. The assembly is placed into an autoclave. This process is generally performed at both elevated pressure and elevated temperature.

### Resin transfer molding (RTM)

RTM is a process using a rigid two-sided mold set that forms both surfaces of the panel. The mold is typically constructed from aluminum or steel, but composite molds are sometimes used. The two sides fit together to produce a mold cavity. The distinguishing feature of resin transfer molding is that the reinforcement materials are placed into this cavity and the mold set is closed prior to the introduction of matrix material. Resin transfer molding includes numerous varieties which differ in the mechanics of how the resin is introduced to the reinforcement in the mold cavity.

### Other fabrication methods

Other types of fabrication include press molding, transfer molding, pultrusion molding, filament winding, casting, centrifugal casting, continuous casting and slip forming.

### Tooling

The mold and mold inserts are referred to as "tooling". The mold/tooling can be constructed from a variety of materials. Tooling materials include invar, steel, aluminum, reinforced silicone rubber, nickel, and carbon fiber. Selection of the tooling material is typically based on, but not limited to, the coefficient of thermal expansion, expected number of cycles, end item tolerance, desired or required surface condition, method of cure, glass transition temperature of the material being molded, molding method, matrix, cost and a variety of other considerations.

The short and long fibers are typically employed in compression molding and sheet molding operations. These come in the form of flakes, chips, and random mate (which can also be made from a continuous fiber laid in random fashion until the desired thickness of the ply / laminate is achieved).

Amongst the preferred natural fibers are flax, jute, kenaf, bagasse, corn fiber, bamboo fiber, wool, cotton, hanf, cotton been preferred. It was found that the best results were achieved with temperatures from 180 to 220 °C, preferably 180 to 210°C and more preferably not exceeding 200°C. Residence times may be up to 10 minutes, preferably 1 to 10 minutes, in accordance to the invention are below 5 and preferably below 3 minutes.

The polylactic acid (A) and the fibers (B), optionally a further polymer (C), such as a styrene(co)polymer, and optionally one or several additives (D) are mixed with one another in an extruder. Preferably, a screw extruder, often a twin-screw extruder, is used for mixing.

The molding is carried out at a temperature of 180-220 °C, preferably at a temperature of 190-220 °C, more preferable at a temperature of 190-210 °C, even more preferably at a temperature of 195-205 °C.

The residence time may be less than 15 min, preferable 10 min or less, in accordance to the invention is less than 5 min, even more preferably less than 3 min, even more preferably less than 2 min. In particular the residence time in the extruder is from 0.1 to 2 min.

The invention is further illustrated by the following examples and claims.

### Examples

### Preparation of natural fiber composites

In laboratory scale, a blend of polylactic acid having a D-lactic acid content of 4 % was heated, together with cotton fiber, to temperatures of 200 to 220 °C.

The yellow-index (YI-value) of the thermoplastic molding obtained was determined, using platelets having the dimensions of 60 x 40 x 2 mm, produced by injection molding. The melt temperature was 240 °C and the mold temperature was 70 °C according to ASTM-methode E313-96 (Lichtart / Beobachter-Kombination C / 2 °).

Yellowness scale ranges from 0 (completely white/clear)
over 5 (light yellow) to 10 (yellow/brownish).

### PLA (component A)

Polylactic acid (commercial product Ingeo 2002D clear, extrusion grade of Nature Works LLC, MFI of 5-7 g/10 min. (210 °C, 2.16 kg), melt temperature 210 °C) was compounded with an impact modifier using a twin-screw extruder with a melt temperature of about 200°C. The melt was passed through a die plate to form strands roughly 3 mm in diameter. Polymer strands were passed through a water bath to cool them and then the cooled polymer was cut into pellets roughly 3 mm in length.

### Cotton fiber (component B)

The cotton fiber was purchased from Alibaba® (raw cotton fiber, 6028), having a fiber length of 0.65 to 1.5mm and a fiber diameter of 2.5 to 10µm.

The following Tables 1 to 3 demonstrate thermoplastic PLA molding compositions, containing polylactic acid A and fibers B. Both components A and B were mixed and put on a heated press.

It is shown that the residence time in the pressing equipment (press) is an important feature in the process of preparation in order to obtain satisfying low yellowness for the molding compositions, in particular when comprising 20 % by weight or more of fibers, in particular cotton fibers (but also kenaf or and other bio-based fibers). Compared to V1 and V2 of Tables 1 to 3, a residence time of 15 min does affect the yellowness of the thermoplastic molding composition. A thermoplastic molding composition comprising 90% by weight of fibers B leads to a high yellowness (YI-value) of 8 (comp. Table 2). A reduction to 50% by weight of fibers B results at a moderate YI-value. Reduction of the residence time of 10 min results in a good YI-value of 3.

**Table 1: Temperature in the press of 220 °C (V1 to V6 show comparative compositions)**

| | V1 | V2 | V3 | V4 | V5 | V6 | 7 | 8 | 9 |
|---|---|---|---|---|---|---|---|---|---|
| PLA (component A) | 100 | 90 | 10 | 50 | 50 | 50 | 50 | 50 | 50 |
| Cotton fiber (component B) | 0 | 10 | 90 | 50 | 50 | 50 | 50 | 50 | 50 |
| Residence time at 220°C | 15 | 15 | 15 | 15 | 10 | 5 | 3 | 2 | 1 |
| Yellowness | 0 | 1 | 8 | 6 | 5 | 5 | 4 | 2 | 2 |

**Table 2: Temperature in the press of 210 °C (V1 to V6 show comparative compositions)**

| | V1 | V2 | V3 | V4 | V5 | V6 | 7 | 8 | 9 |
|---|---|---|---|---|---|---|---|---|---|
| PLA (component A) | 100 | 90 | 10 | 50 | 50 | 50 | 50 | 50 | 50 |
| Cotton fiber (component B) | 0 | 10 | 90 | 50 | 50 | 50 | 50 | 50 | 50 |
| Residence time at 220°C | 15 | 15 | 15 | 15 | 10 | 5 | 3 | 2 | 1 |
| Yellowness | 0 | 1 | 7 | 5 | 3 | 2 | 2 | 1 | 1 |

**Table 3: Temperature in the press of 200 °C (V1 to V6 show comparative compositions)**

| | V1 | V2 | V3 | V4 | V5 | V6 | 7 | 8 | 9 |
|---|---|---|---|---|---|---|---|---|---|
| PLA (component A) | 100 | 90 | 10 | 50 | 50 | 50 | 50 | 50 | 50 |
| Cotton fiber (component B) | 0 | 10 | 90 | 50 | 50 | 50 | 50 | 50 | 50 |
| Residence time at 220°C | 15 | 15 | 15 | 15 | 10 | 5 | 3 | 2 | 1 |
| Yellowness | 0 | 1 | 6 | 4 | 2 | 2 | 1 | 1 | 1 |

It can also be shown that with residence times of 1 to 10 minutes, in particular 1 to 5 minutes in the press, the process of preparation leads to particularly good low yellowness values for the molding compositions combined with improved mechanical properties, when the composition is comprising at least 40 % by weight of PLA (A), at least 40 % by weight of fibers B, and 0.1 % to 3 % by weight of a silane coupling agent (DC).

## Claims

1. A thermoplastic molding composition obtainable from polylactic acid and fibers by the following process steps:
a) mixing the following components, without using a solvent:
A) 20 to 55 % (w/w) of at least one thermoplastic polylactic acid (PLA),
B) 45 to 80 % (w/w) of natural fibers having a length of 0.1 to 100 mm selected from the group consisting of cotton fibers, kenaf fibers, jute fibers, flax fibers, hemp fibers, cellulosic fibers, sisal fibers, chitin fibers, keratin fibers and coir fibers and/or pre-treated fibers selected from the group consisting of pre-treated cotton fibers, kenaf fibers, jute fibers, flax fibers, hemp fibers, cellulosic fibers, sisal fibers, chitin fibers, keratin fibers and coir fibers,
C) 0 to 60 % (w/w) of further polymer component(s), which differ from A), and
D) 0 to 50 % (w/w) of one or more additive(s), which differ from A) to C), where the weight percents of components A to D add up to 100 % by weight; and
b) heat treatment of the mixture obtained in step a), without using a solvent, with a temperature of 180° to 220°C for a period of less than 5 minutes; and
c) cooling of the thermoplastic molding composition obtained in step b) below the glass transition temperature (Tg) of the molding composition leading to solidification of the molding composition.

2. The thermoplastic molding composition according to claim 1, obtained by using the following components:
A) 30 to 55 % (w/w) of at least one PLA,
B) 45 to 70 % (w/w) of the natural fibers and/or pre-treated fibers,
C) 0 to 30 % (w/w) of further polymer component(s), and
D) 0 to 30 %, in particular 0.01 to 5 %, (w/w) of one or more additive(s).

3. The thermoplastic molding composition according to claim 1 or 2, obtained by using the following components:
A) PLA, with an L-lactic acid/D-lactic acid ratio from 0:100 to 6:94,
B) natural fibers, in particular fibers derived from natural cotton.

4. The thermoplastic molding composition according to one or more of claims 1 to 3, obtained by using a PLA component A, with an L-lactic acid/D-latic acid ratio from 0.5:99.5 to 6:94, in particular from 2:98 to 4:96.

5. The thermoplastic molding composition according to one or more of claims 1 to 4, obtained by using at least one further polymer component (C) in an amount of 1-20 %, selected from the group of polystyrene, styrene-acrylonitrile copolymers, polycarbonates, polyesters and polyamides.

6. The thermoplastic molding composition according to one or more of claims 1 to 5, obtained by using at least one additive component (D) selected from the group of coupling agents (DC), lubricants, waxes, talcum, light stabilizers, heat stabilizers, process stabilizers, antioxidants, pigments, catalysts, particulate filling agents.

7. The thermoplastic molding composition according to one or more of claims 1 to 6, obtained by using as component A a PLA which has a melt flow index (determined at a temperature of 210°C and at a load of 2,16 kg according to ASTM procedure D1238) of between 3 and 10 g/10 min, and by using as component B cotton fibers with a fiber length of 0.5 to 2 mm and a fiber diameter of 2 to 20 micrometer.

8. The thermoplastic molding composition according to claims 1 to 7, obtained by using 0.1 to 3 % (w/w) of a coupling agent (DC).

9. Process for the preparation of a thermoplastic molding composition, which comprises the following process steps:
step (i) of mixing the components A and B, and optionally C and D, according to one or more of claims 1 to 7, without using a solvent, and
step (ii) of heat treatment with a temperature of 180° to 220°C without using a solvent for a period of less than 5 minutes, and
step (iii) of cooling of the molding composition below the glass transition temperature (Tg) of the composition leading to solidification of the molding composition.

10. Process for the preparation of a thermoplastic molding composition according to claim 9, which comprises the step of a heat treatment (ii) with a temperature of 180° to 210°C in a press for a period of less than 5 minutes.

11. Process for the preparation of a thermoplastic molding composition according to claim 9 or 10, which comprises the step of heat treatment (ii) with a temperature of 180° to 200°C for a period of less than 5 minutes, in particular less than 3 minutes.

12. Use of a thermoplastic molding composition according to one or more of claims 1 to 10 or obtained by a process according to one or more of claims 9 to 11 for producing a composite product selected from:
(i) film material,
(ii) packing material,
(iii) plastics molding,
(iv) fiber or yarn,
(v) fabric or tissue, and
(vi) micro- or nanobeads.

13. Use of a thermoplastic molding composition according to claim 12 for producing a composite product selected from:
(i) film material,
(ii) packing material,
(iii) plastics molding,
(iv) fiber or yarn,
(v) fabric or tissue,
wherein said thermoplastic molding composition constitutes for more than 60 %, in particular more than 80 % (w/w) of said composite product.

## Patentansprüche

1. Thermoplastische Formmasse, erhältlich aus Polymilchsäure und Fasern durch die folgenden Verfahrensschritte:
a) Mischen der folgenden Komponenten ohne Verwendung eines Lösungsmittels:
A) 20 bis 55 % (w/w) mindestens einer thermoplastischen Milchsäure (Polylactic Acid, PLA),
B) 45 bis 80 % (w/w) natürlicher Fasern mit einer Länge von 0,1 bis 100 mm, die aus der Gruppe bestehend aus Baumwollfasern, Kenaffasern, Jutefasern, Flachsfasern, Hanffasern, Cellulosefasern, Sisalfasern, Chitinfasern, Keratinfasern und Kokosfasern ausgewählt sind, und/oder vorbehandelter Fasern, die aus der Gruppe bestehend aus vorbehandelten Baumwollfasern, Kenaffasern, Jutefasern, Flachsfasern, Hanffasern, Cellulosefasern, Sisalfasern, Chitinfasern, Keratinfasern und Kokosfasern ausgewählt sind,
C) 0 bis 60 % (w/w) einer weiteren Polymerkomponente bzw. weiterer Polymerkomponenten, die von A) verschieden ist bzw. sind, und
D) 0 bis 50 % (w/w) eines Additivs oder mehrerer Additive, das bzw. die von A) bis C) verschieden ist bzw. sind, wobei die Gewichtsprozente der Komponenten A bis D zusammen 100 Gewichts-% ergeben; und
b) Wärmebehandlung der in Schritt a) erhaltenen Mischung ohne Verwendung eines Lösungsmittels mit einer Temperatur von 180 °C bis 220 °C für einen Zeitraum von weniger als 5 Minuten; und
c) Kühlen der in Schritt b) erhaltenen thermoplastischen Formmasse unterhalb der Glasübergangstemperatur (Tg) der Formmasse, was zur Verfestigung der Formmasse führt.

2. Thermoplastische Formmasse nach Anspruch 1, erhalten durch Verwendung der folgenden Komponenten:
A) 30 bis 55 % (w/w) mindestens einer PLA,
B) 45 bis 70 % (w/w) natürlicher Fasern und/oder vorbehandelter Fasern,
C) 0 bis 30 % (w/w) einer weiteren Polymerkomponente bzw. weiterer Polymerkomponenten und
D) 0 bis 30 %, insbesondere 0,01 bis 5 % (w/w), eines Additivs oder mehrerer Additive.

3. Thermoplastische Formmasse nach Anspruch 1 oder 2, erhalten durch Verwendung der folgenden Komponenten:
A) PLA, mit einem (L-Milchsäure/D-Milchsäure)-Verhältnis von 0:100 bis 6:94,
B) natürliche Fasern, insbesondere von Naturbaumwolle abgeleitete Fasern.

4. Thermoplastische Formmasse nach einem oder mehreren der Ansprüche 1 bis 3, erhalten durch Verwendung einer PLA-Komponente A mit einem (L-Milchsäure/D-Milchsäure)-Verhältnis von 0,5:99,5 bis 6:94, insbesondere 2:98 bis 4:96.

5. Thermoplastische Formmasse nach einem oder mehreren der Ansprüche 1 bis 4, erhalten durch Verwendung mindestens einer weiteren Polymerkomponente (C) in einer Menge von 1-20 %, die aus der Gruppe von Polystyrol, Styrol-Acrylnitril-Copolymeren, Polycarbonaten, Polyestern und Polyamiden ausgewählt ist.

6. Thermoplastische Formmasse nach einem oder mehreren der Ansprüche 1 bis 5, erhalten durch Verwendung mindestens einer Additivkomponente (D), die aus der Gruppe von Haftvermittlern (DC), Schmiermitteln, Wachsen, Talkum, Lichtstabilisatoren, Wärmestabilisatoren, Prozessstabilisatoren, Antioxidantien, Pigmenten, Katalysatoren, teilchenförmigen Füllstoffen ausgewählt ist.

7. Thermoplastische Formmasse nach einem oder mehreren der Ansprüche 1 bis 6, erhalten durch Verwendung einer PLA, die einen Schmelzindex (bestimmt bei einer Temperatur von 210 °C und einer Beladung von 2,16 kg gemäß ASTM-Vorschrift D1238) zwischen 3 und 10 g/10 min aufweist, als Komponente A und durch Verwendung von Baumwollfasern mit einer Faserlänge von 0,5 bis 2 mm und einem Faserdurchmesser von 2 bis 20 Mikrometer als Komponente B.

8. Thermoplastische Formmasse nach den Ansprüchen 1 bis 7, erhalten durch Verwendung von 0,1 bis 3 % (w/w) eines Haftvermittlers (DC).

9. Verfahren zur Herstellung einer thermoplastischen Formmasse, das die folgenden Verfahrensschritte umfasst:
Schritt (i) des Mischens der Komponenten A und B und gegebenenfalls C und D nach einem oder mehreren der Ansprüche 1 bis 7 ohne Verwendung eines Lösungsmittels und
Schritt (ii) der Wärmebehandlung mit einer Temperatur von 180 °C bis 220 °C ohne Verwendung eines Lösungsmittels für einen Zeitraum von weniger als 5 Minuten und
Schritt (iii) des Kühlens der Formmasse unterhalb der Glasübergangstemperatur (Tg) der Masse, was zur Verfestigung der Formmasse führt.

10. Verfahren zur Herstellung einer thermoplastischen Formmasse nach Anspruch 9, das den Schritt einer Wärmebehandlung (ii) mit einer Temperatur von 180 °C bis 210 °C in einer Presse für einen Zeitraum von weniger als 5 Minuten umfasst.

11. Verfahren zur Herstellung einer thermoplastischen Formmasse nach Anspruch 9 oder 10, das den Schritt einer Wärmebehandlung (ii) mit einer Temperatur von 180 °C bis 200°C für einen Zeitraum von weniger als 5 Minuten, insbesondere weniger als 3 Minuten, umfasst.

12. Verwendung einer thermoplastischen Formmasse nach einem oder mehreren der Ansprüche 1 bis 10 oder die durch ein Verfahren nach einem oder mehreren der Ansprüche 9 bis 11 erhalten wurde zur Herstellung eines Verbundprodukts, das aus Folgendem ausgewählt ist:
(i) Folienmaterial,
(ii) Verpackungsmaterial,
(iii) Kunststoffformteil,
(iv) Faser oder Garn,
(v) textiles Flächengebilde oder Stoff und
(vi) Mikro- oder Nanokugeln.

13. Verwendung einer thermoplastischen Formmasse nach Anspruch 12 zur Herstellung eines Verbundprodukts, das aus Folgendem ausgewählt ist:
(i) Folienmaterial,
(ii) Verpackungsmaterial,
(iii) Kunststoffformteil,
(iv) Faser oder Garn,
(v) textiles Flächengebilde oder Stoff,
wobei die thermoplastische Formmasse mehr als 60 %, insbesondere mehr als 80 % (w/w), des Verbundprodukts ausmacht.

## Revendications

1. Composition de moulage thermoplastique pouvant être obtenue à partir d'acide polylactique et de fibres par les étapes de procédé suivantes :
a) mélange des constituants suivants, sans utiliser de solvant :
A) 20 à 55 % (p/p) d'au moins un acide polylactique (PLA) thermoplastique,
B) 45 à 80 % (p/p) de fibres naturelles d'une longueur de 0,1 à 100 mm sélectionnées dans le groupe constitué de fibres de coton, de fibres de kénaf, de fibres de jute, de fibres de lin, de fibres de chanvre, de fibres cellulosiques, de fibres de sisal, de fibres de chitine, de fibres de kératine et de fibres de coco et/ou de fibres prétraitées sélectionnées dans le groupe constitué de fibres de coton, de fibres de kénaf, de fibres de jute, de fibres de lin, de fibres de chanvre, de fibres cellulosiques, de fibres de sisal, de fibres de chitine, de fibres de kératine et de fibres de coco prétraitées,
C) 0 à 60 % (p/p) d'un ou plusieurs constituants polymères supplémentaires, qui diffèrent de A), et
D) 0 à 50 % (p/p) d'un ou plusieurs additifs, qui diffèrent de A) à C), lorsque les pourcentages pondéraux des constituants A à D représentent au total 100 % en poids ; et
b) traitement thermique du mélange obtenu à l'étape a), sans utiliser de solvant, à une température de 180 ° à 220 °C pendant une période de moins de 5 minutes ; et
c) refroidissement de la composition de moulage thermoplastique obtenue à l'étape b) en dessous de la température de transition vitreuse (Tg) de la composition de moulage, entraînant une solidification de la composition de moulage.

2. Composition de moulage thermoplastique selon la revendication 1, obtenue en utilisant les constituants suivants :
A) 30 à 55 % (p/p) d'au moins un PLA,
B) 45 à 70 % (p/p) des fibres naturelles et/ou des fibres prétraitées,
C) 0 à 30 % (p/p) d'un ou plusieurs constituants polymères supplémentaires, et
D) 0 à 30 %, en particulier 0,01 à 5 % (p/p) d'un ou plusieurs additifs.

3. Composition de moulage thermoplastique selon la revendication 1 ou 2, obtenue en utilisant les constituants suivants :
A) PLA, ayant un rapport acide L-lactique/acide D-lactique de 0:100 à 6:94,
B) des fibres naturelles, en particulier des fibres dérivées de coton naturel.

4. Composition de moulage thermoplastique selon une ou plusieurs des revendications 1 à 3, obtenue en utilisant un constituant A PLA, ayant un rapport acide L-lactique/acide D-lactique de 0,5:99,5 à 6:94, en particulier de 2:98 à 4:96.

5. Composition de moulage thermoplastique selon une ou plusieurs des revendications 1 à 4, obtenue en utilisant au moins un constituant polymère supplémentaire (C) dans une quantité de 1 à 20 %, sélectionné dans le groupe constitué d'un polystyrène, de copolymères de styrène-acrylonitrile, de polycarbonates, de polyesters et de polyamides.

6. Composition de moulage thermoplastique selon une ou plusieurs des revendications 1 à 5, obtenue en utilisant au moins un constituant additif (D) sélectionné dans le groupe constitué d'agents de couplage (DC), de lubrifiants, de cires, de talcs, de stabilisants à la lumière, de stabilisants thermiques, de stabilisants de procédé, d'antioxydants, de pigments, de catalyseurs, et de charges particulaires.

7. Composition de moulage thermoplastique selon une ou plusieurs des revendications 1 à 6, obtenue en utilisant comme constituant A un PLA qui a un indice d'écoulement à l'état fondu (déterminé à une température de 210 °C et sous une charge de 2,16 kg selon la procédure ASTM D1238) de 3 à 10 g/10 min, et en utilisant comme constituant B des fibres de coton ayant une longueur de fibre de 0,5 à 2 mm et un diamètre de fibre de 2 à 20 micromètres.

8. Composition de moulage thermoplastique selon les revendications 1 à 7, obtenue en utilisant 0,1 à 3 % (p/p) d'un agent de couplage (DC).

9. Procédé de préparation d'une composition de moulage thermoplastique, comprenant les étapes de procédé suivantes :
étape i) de mélange des constituants A et B, et optionnellement C et D, selon une ou plusieurs des revendications 1 à 7, sans utiliser de solvant, et
étape ii) de traitement thermique à une température de 180° à 220°C sans utiliser de solvant, pendant une période de moins de 5 minutes, et
étape iii) de refroidissement de la composition de moulage en dessous de la température de transition vitreuse (Tg) de la composition, entraînant une solidification de la composition de moulage.

10. Procédé de préparation d'une composition de moulage thermoplastique selon la revendication 9, comprenant l'étape de traitement thermique (ii) à une température de 180 ° à 210 °C dans une presse pendant une période de moins de 5 minutes.

11. Procédé de préparation d'une composition de moulage thermoplastique selon la revendication 9 ou 10, comprenant l'étape de traitement thermique (ii) à une température de 180 ° à 200 °C pendant une période de moins de 5 minutes, en particulier de moins de 3 minutes.

12. Utilisation d'une composition de moulage thermoplastique selon une ou plusieurs des revendications 1 à 10, ou obtenue par un procédé selon une ou plusieurs des revendications 9 à 11, pour la production d'un produit composite sélectionné parmi :
(i) un matériau sous forme de film,
(ii) un matériau d'emballage,
(iii) un moulage en matière plastique,
(iv) une fibre ou un fil,
(v) un tissu ou un papier tissu, et
(vi) des micro-ou nanobilles.

13. Utilisation d'une composition de moulage thermoplastique selon la revendication 12 pour la production d'un produit composite sélectionné parmi :
(i) un matériau sous forme de film,
(ii) un matériau d'emballage,
(iii) un moulage en matière plastique,
(iv) une fibre ou un fil,
(v) un tissu ou un papier tissu,
dans laquelle ladite composition de moulage thermoplastique constitue plus de 60 %, en particulier plus de 80 % (p/p) dudit produit composite.
